# EUROPEAN PATENT APPLICATION

(11) **EP 4 708 011 A1**
(43) Date of publication of application: **11.03.2026**
(21) Application number: 24800309.7
(22) Date of filing: 24.04.2024
(51) Int. Cl.: G06F 3/04842, G06T 11/60, G06F 40/149, G06F 3/0488

(54) **METHOD AND APPARATUS FOR DISPLAYING IMAGE-TEXT CONTENT, AND STORAGE MEDIUM AND COMPUTER PROGRAM PRODUCT**

(30) Priority: 28.04.2023 CN 202310484034
(71) Applicant: Lemon Inc., Grand Cayman, KY1-1205 (KY)
(72) Inventor: ZHENG, Linyi, Beijing 100028 (CN); MA, Xiaotong, Beijing 100028 (CN); ZHANG, Xinyu, Beijing 100028 (CN); LI, Yujie, Beijing 100028 (CN); TAN, Siqi, Culver City, California 90230 (US); CHEN, Linlin, Culver City, California 90230 (US)
(74) Representative: Isarpatent
(86) International application number: PCT/SG2024/050266
(87) International publication number: WO 2024/228668

(57) **Abstract**

The present disclosure relates to the technical field of terminals, and particularly relates to a method and apparatus for displaying image-text content, and a storage medium and a computer program product. The method for displaying image-text content comprises: displaying image-text content in a feed, wherein the image-text content comprises a picture and thumbnail text; receiving an operation of a user for the picture in the image-text content; and in response to a specified operation of the user for the picture in the image-text content, displaying a details page of the image-text content, wherein the details page comprises the picture and complete text.

## Description

### CROSS-REFERENCE TO RELATED APPLICATIONS

The present disclosure is based on and claims the priority of Chinese Patent Application for invention No. 202310484034.1, filed on April 28th, 2023, the disclosure of which is hereby incorporated into this disclosure by reference in its entirety.

### TECHNICAL FIELD

The present disclosure relates to the technical field of terminals, and in particular, to a display method and a display apparatus for image-text content, a storage medium, and a computer program product.

### BACKGROUND

In applications based on feeds, users can browse different media content typically comprising video or image-text (image and text) information through convenient switching operations. Image-text information uses text information, which is usually relatively short, to describe image(s) or other brief information that the publisher wants to present.

### SUMMARY

According to a first aspect of some embodiments of the present disclosure, there is provided a display method for image-text content, comprising: displaying image-text content in a feed, wherein the image-text content comprises an image and a truncated text; receiving an operation performed by a user on the image of the image-text content; and displaying a detail page of the image-text content in response to the operation performed by the user on the image of the image-text content being a specified operation, the detail page comprising the image and a full text.

In some embodiments, the specified operation comprises a sliding operation.

In some embodiments, the sliding operation of the specified operation has different sliding information from a sliding operation for switching between different content in the feed, the sliding information comprising at least one of a sliding direction or a sliding distance.

In some embodiments, the image-text content comprises a plurality of images, and the displaying the detail page of the image-text content in response to the operation performed by the user on the image of the image-text content being the specified operation comprises: displaying the detail page of the image-text content in response to the sliding operation performed by the user on any one of the plurality of images.

In some embodiments, the image-text content comprises a plurality of images, and the displaying the detail page of the image-text content in response to the operation performed by the user on the image of the image-text content being the specified operation comprises: displaying the detail page of the image-text content in response to the sliding operation performed by the user on a last image among the plurality of images, wherein a sliding operation performed by the user on other image than the last image among the plurality of images is used to switch to a display of an adjacent image of the other image.

In some embodiments, the display method further comprises: displaying the image-text content in the feed in response to a return operation performed by the user on the detail page; and before the user switches to content other than the image-text content in the feed, not displaying the detail page in response to another sliding operation performed by the user on the image.

In some embodiments, the specified operation comprises a scaling operation.

In some embodiments, the specified operation comprises a click operation.

In some embodiments, the displaying the image-text content in the feed comprises: in response to an automatic playback of the image being enabled in the feed, stopping the automatic playback of the image in response to a sliding operation on the image.

In some embodiments, an automatic playback state of the image in the detail page is same as a last automatic playback state of the image before entering the detail page.

In some embodiments, the displaying the detail page of the image-text content comprises: in response to an automatic playback of the image being enabled in the detail page, stopping the automatic playback of the image in response to a sliding operation on the image.

In some embodiments, the image-text content further comprises background music, and the display method further comprises: continuing playing the background music in response to stopping automatic image playback in the detail page of the image-text content.

In some embodiments, an aspect ratio of the image in the image-text content is less than a first ratio threshold.

In some embodiments, an image in the image-text content having an aspect ratio greater than the first ratio threshold is cropped based on the first ratio threshold and then displayed.

In some embodiments, an image container used to carry the image has an aspect ratio equal to the first ratio threshold, and the image in the image container is displayed after adaptive scaling.

In some embodiments, the image container for carrying the images is arranged as a sticky element on an upper side of an interface of the feed.

In some embodiments, the truncated text comprises a text of a target length and an identifier of the truncation text, wherein the identifier represents at least one of a prompt to view details, a length of a text in the full text other than the truncated text, or a reading time of the text in the full text other than the truncated text.

In some embodiments, the target length is determined from an aspect ratio of the image.

In some embodiments, the target length is a first length in response to an aspect ratio of at least one image of the image-text content is greater than a second ratio threshold; and the target length is a second length that is no greater than the first length in response to the aspect ratio of the at least one image of the image-text content is not greater than the second ratio threshold.

According to a second aspect of some embodiments of the present disclosure, there is provided a display apparatus for image-text content, comprising: a memory; and a processor coupled to the memory, the processor configured to, based on instructions stored in the memory, carry out any one of the foregoing display methods for image-text content.

According to a third aspect of some embodiments of the present disclosure, there is provided a computer-readable storage medium on which a computer program is stored, wherein the program when executed by a processor carries out any one of the foregoing display methods for image-text content.

According to a fourth aspect of some embodiments of the present invention, there is provided a computer program product, which when executed on a computer causes the computer to implement any one of the foregoing display methods for image-text content.

According to a fifth aspect of some embodiments of the present invention, there is provided a computer program, comprising: instructions that, when executed by a processor, cause the processor to perform any one of the foregoing display methods for image-text content.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 shows a flowchart of an information display method according to some embodiments of the present disclosure;
FIGS. 2A and 2B illustrate an interface layout of a feed;
FIG. 3A shows a schematic diagram of a page of image-text content;
FIG. 3B shows a schematic diagram of a detail page of image-text content;
FIG. 4 shows a flowchart of an automatic playback control method according to some embodiments of the present disclosure;
FIG. 5 shows a schematic structural diagram of a display apparatus for image-text content according to some embodiments of the present disclosure;
FIG. 6 shows a schematic structural diagram of a display apparatus for image-text content according to other embodiments of the present disclosure;
FIG. 7 shows a schematic structural diagram of a display apparatus for image-text content according to still other embodiments of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

A feed comprises a massive amount of media information, and users can switch between different media information by switching operations such as sliding up and down. Except for the switching process, users are typically presented with one piece of media content at a time to maximize the amount of information conveyed by each piece of media content.

Currently, media content in feeds and other applications tends to be short videos (videos with a duration less than a video length threshold, such as videos less than 1 minute), image-text content with accompanying short text (text with a length less than a text length threshold), and there is less information consisting of mixed image(s) and long text. As a result, such applications can help users quickly obtain more diverse information and improve a range of information dissemination.

After analyzing relevant technologies, it was found that some users also have a need for more in-depth information gathering. Images with long text (text having a length greater than a text length threshold) can well meet the needs of these users. However, feeds mainly present image(s) and cannot accommodate a large amount of text.

On such basis, a technical problem to be actually solved in the present application is how to present image-text content to facilitate users' efficient access to long text information.

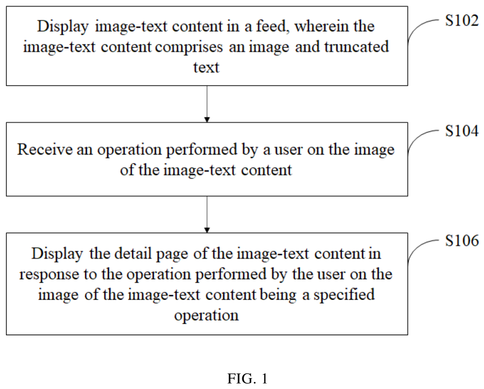

FIG. 1 shows a flowchart of an information display method according to some embodiments of the present disclosure. The method of this embodiment can be executed by a terminal, such as a mobile phone, tablet, personal computer, etc. As shown in FIG. 1, the display method for image-text content of this embodiment comprises steps S102 to S104.

In step S102, image-text content is displayed in a feed, wherein the image-text content comprises an image and truncated text.

The image-text content is content that comprises both an image and a text in a feed, but full information of the image-text content is too long to display in its entirety on the feed page.

The image-text content may comprise one or more images. In some embodiments, in response to the image-text content comprising multiple images, the multiple images of the image-text content are displayed one by one, such as by automatic playback or by switching and displaying in response to user actions.

In some embodiments, an aspect ratio of the image in the image-text content is less than a first ratio threshold. For example, images with an aspect ratio less than the first ratio threshold can be cropped and displayed so that the cropped images have an aspect ratio equal to the first ratio threshold. Thus, the consistency of the display of the images can be improved.

In some embodiments, in the feed, an image container used to carry the image has an aspect ratio equal to the first ratio threshold, and the image in the image container is displayed after adaptive scaling. After scaling, the top and bottom sides of the image reach the top and bottom sides of the image container, or the left and right sides of the image reach the left and right sides of the image container, to automatically achieve maximum display of the image in the image container, so that a larger image is displayed to the user as much as possible within a given layout. In some embodiments, the image is centered in the image container.

In some embodiments, the image of the image-text content is positioned in the image container, and the image container is arranged as a sticky element on the upper side of an interface of the feed. This top-sticky arrangement means that the upper side of the image container reaches the upper side of the interface. In this way, the screen space can be fully utilized.

In some embodiments, in response to there being other controls near the top of the interface of the feed in addition to the image container, these controls may float over the image container to prevent the display of the image from being interfered with by these controls.

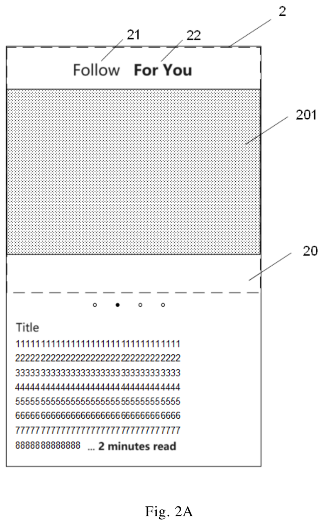

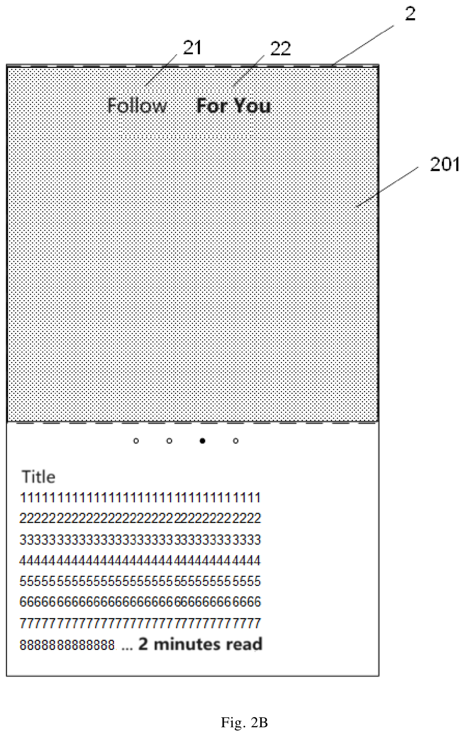

An image container displayed in a top-sticky manner can, in some cases, achieve a "full screen" effect on a portion of the interface. FIGS. 2A and 2B illustrate effects of images displayed at different ratios.

In FIGS. 2A and 2B, a feed interface 2 comprises an image container 20, which is arranged in a top-sticky manner in the interface 2. In addition, there are also a "Follow" control 21 and a "For You" control 22 in the interface. Certain image-text content comprises images 201 (as shown in FIG. 2A) and 202 (as shown in FIG. 2B), both of which are adaptively displayed in an image container 20.

As shown in FIG. 2B, an aspect ratio of the image 202 is exactly the same as that of the image container 20, or the image 202 is cropped because the original image has an aspect ratio greater than that of the image container 20, and the cropped image 202 has an aspect ratio consistent with that of the image container 20. In this case, the image container 202 as well as the upper half of the interface 2 is filled with the image 202. Since the image container 20 is displayed in a top-sticky manner, the image 202 is also displayed in a top-sticky manner. The "Follow" control 21 and the "For You" control 22 are floated over the image 202. This creates a "full screen" effect in the top half of the interface 2, maximizing the use of the interface space and increasing the amount of information presented to the user.

In some embodiments, the truncated text is in a text container in a preview interface, i.e., the interface of the feed. The image container is positioned above the text container and may be overlapped by the text container. That is, the center of the image container is higher than the center of the text container. In some cases (e.g., the image has a larger height and takes up most of the interface space), the truncated text may visually float over the image.

For information that comprises long text, displaying all of the text in a feed directly has a significant impact on the layout and interaction of the feed. Therefore, for information comprising long text, only the image-text content comprising image(s) and the truncated text is displayed in the feed. In a case where a user is interested in such image-text content, a detail page can be displayed for further access to the full text.

The truncated text in the image-text content refers to a text obtained by deleting part of the full text, and may be marked with a identifier of the truncated text. For example, the truncated text may be a portion of the full text starting from the beginning of the full text, with the a portion deleted, or it may be one or more segments automatically extracted from the full text by natural language processing algorithms. A length of the truncated text can be determined based on a target length threshold, which can be measured in words, lines, and so on.

In some embodiments, the truncated text comprises a text of a target length and the identifier of the truncated text. This allows users to be prompted to view the detail page when there is only limited display space for the text in image-text content.

The identifier of the truncated text may be formatted differently from other text content (e.g. different bold, font, color, background, etc.) to facilitate discrimination by users. The text of a target length and the identifier of the truncated text can also be concatenated by a symbol such as "...", or the identifier of the truncated text can be placed in parentheses.

In some embodiments, the identifier of the truncated text represents at least one of a prompt to view details, a length of a text in the full text other than the truncated text, or a reading time of the text in the full text other than the truncated text.

The prompt to view details may be a prompt such as "more" or "see more" to indicate that there is more content that has been omitted, or "long text" to indicate an attribute of the image-text content to prompt users to view a further detail page.

The length of a text in the full text other than the truncated text refers to the length of the remaining text that is not displayed, which can be counted in words, lines, etc. For example, in a case where a text of certain image-text content is 1500 words in total, and the truncated text contains 150 words, there are still 1350 words omitted. The identifier of the truncated text may be "1350 words". This allows the length of the remaining text to be accurately quantified.

The reading time of the text in the full text other than the truncated text refers to the time required to read the remaining text that is not displayed, and indicates how much additional time it takes users to read the full text. This reading time of the text in the full text other than the truncated text can be an average reading time of the audience, for example, the reading time of the text in the full text other than the truncated text can be determined from a correspondence between the numbers of words and reading times in a statistical data. For example, if 120 words take 40 seconds to read and 360 words are omitted, the identifier of the truncated text could be "2 minutes read" or "2 minutes left to read". This makes it possible to visualize the rest of the information in terms of time.

Other types of identifiers of the truncated text may also be used by those skilled in the art according to their needs, which will not be described in detail.

In some embodiments, the target length of the truncated text is determined based on the aspect ratio of the image. In a case where the aspect ratio of the image allows more space available in the current interface, the target length can be increased accordingly. Thus, the length of the displayed text can be adaptively determined based on the aspect ratio of the image.

In some embodiments, the target length is a first length in response to an aspect ratio of at least one image of the image-text content is greater than a second ratio threshold; and the target length is a second length that is no greater than the first length in response to the aspect ratio of the at least one image of the image-text content is not greater than the second ratio threshold.

In some embodiments, the feed also comprises video content comprising a video and a text of the video. In this way, the media types of the feed are enriched. The text of the video is displayed in full or truncated, for example, in a case where a text exceeds a video text length threshold, truncated text is displayed by default. The full text is displayed after a user triggers an interactive control to display the full content.

In some embodiments, in response to an aspect ratio of at least one image of the image-text content being greater than the second ratio threshold, the length of the truncated text of the image-text content is greater than the length of the truncated text in the video content. Images with a larger aspect ratio take up less space in the height direction, allowing more text content to be displayed clearly. In this case, it is possible to display more text of the image-text content than the video content. For example, the text of image-text content in a feed can be displayed in up to 8 lines, while the text of video content is displayed in 4 lines by default. It can thus differentiate between different types of content while improving the efficiency of information delivery.

In some embodiments, the second ratio threshold is greater than the first ratio threshold.

In step S104, an operation performed by a user on the image of the image-text content is received.

In step S106, the detail page of the image-text content is displayed in response to the operation performed by the user on the image of the image-text content being a specified operation, wherein the detail page comprises the image and a full text.

In a case where a user performs a specified operation on the image in the image-text content, the user may be interested in the image-text content. Therefore, the display of the detail page can be triggered by the specified operation. In addition, the large coverage area of the image also makes operation more convenient for users. The specified operation can comprise one or more types of operations.

In some embodiments, the specified operation is an operation commonly used for viewing images, such as an operation for switching between images or scaling images. Some specific operations will be described below as examples.

In some embodiments, the specified operation comprises a sliding operation. In some embodiments, the sliding operation has at least one of a target direction or a target distance. For example, in applications where images are switched by horizontal sliding, the sliding operation can also be horizontal sliding. The 'horizontal' sliding may not be absolute, for example, if an angle between the sliding direction and the horizontal direction is within a target range, the sliding direction can be considered as the 'horizontal direction'. The target distance, which can also be a range, can refer to a distance specified for other sliding operations, or is a sliding distance specified separately.

In some embodiments, the sliding operation of the specified operation has different sliding information from a sliding operation for switching between different content in a feed, the sliding information comprising at least one of sliding direction or sliding distance. Thus, it can be distinguished from the operation for content switching.

A sliding operation is usually used to switch between images. When a user wants to view images other than a currently displayed image in the image-text content, it indicates that the user may be interested in the image-text content, and therefore the display of the detail page can be triggered.

In some embodiments, the action range of the sliding operation is an area covered by the currently displayed image or the image container. The action range refers, for example, to a touch range during the execution of the sliding operation, or a starting touch point of the sliding operation, etc. Other settings can be made as required by those skilled in the art which will not be repeated here.

In some embodiments, the sliding operation is a sliding operation on any image. This can improve the convenience of accessing the detail page.

In some embodiments, the sliding operation is a sliding operation on the last image of the plurality of images, and a sliding operation on images other than the last image does not trigger the display of the detail page, but rather performs the operation of switching to the display of an adjacent image. Thus, when it is confirmed that the user has received more information about the image-text content, i.e. when a high level of interest has been generated, the display of the detail page is triggered.

Considering that sliding is a relatively high-frequency operation, in order to reduce the probability of misoperation, when the user enters the detail page by sliding, the first sliding after returning to the feed no longer triggers the display of the detail page. In some embodiments, the image-text content is displayed in the feed in response to a return operation performed by the user on the detail page; and before the user switches to content other than the image-text content in the feed, wherein the detail page is not displayed in response to another sliding operation performed by the user on the image. That is, no feedback is provided for this operation, or a feedback of switching to an adjacent image is provided. The detail page can be re-accessed in another way as needed. In addition, if the user switches to another content in the feed and then switches back to that image-text content, the display of the detail page can be re-triggered by a sliding operation.

For example, when image-text content A is displayed in a feed, the user can slide on an image of image-text content A to enter its detail page. When the user performs a return operation on the detail page of image-text content A and returns to image-text content A in the feed, if the user does not switch to a previous content B or a next content C of image-text content A, the detail page of A cannot be accessed when the user performs a further sliding operation on an image of image-text content A. In this situation, the sliding operation can be used for image switching, for example. If the user switches to B or C, a detail page of B or C can be accessed by a sliding operation. When the user switches back to A from B or C, if the user performs another sliding operation on an image of A, the detail page of A will be displayed. This reduces the probability of misoperation by users who have already read the detail page or have little interest in the content.

This method of triggering the display of the detail page by the sliding operation is relatively simple and easy for users to operate, thus improving the interactivity of the image-text content.

In some embodiments, the specified operation comprises a scaling operation. When a user wants to upscale an image, it indicates that the user is interested in the content. An upscaling operation is usually accompanied by a downscaling operation, or a downscaling operation may be performed due to improper operation when the user wants an upscaling operation. Therefore, the downscaling operation may indirectly reflect the user's interest.

The following is an exemplary description of the two detection processes.

In some embodiments, a user first touches a screen with his two fingers, then zooms in an image with a pinch out gesture, and finally triggers the display of the detail page when the user stops touching the screen.

In some embodiments, a user first touches a screen with his two fingers, zooms in an image with a pinch out gesture, followed by a pinch in gesture to zoom out the image, and then triggers the display of the detail page when the user stops touching the screen.

That is, after detecting the user's scaling operation, the display of the detail page can be triggered when the user stops touching the screen.

The frequency of triggering the display of the detail page with zoom in and out operation is relatively low, resulting in a lower probability of misoperation by users, thus improving the interactivity of the image-text content.

In some embodiments, the specified operation comprises a click operation. For example, if a user clicks on any image in the image-text content, the detail page of image-text content can be accessed.

This method of triggering the display of the detail page through a click operation is more intuitive and easy for users to understand and operate, thus improving the interactivity of the image-text content.

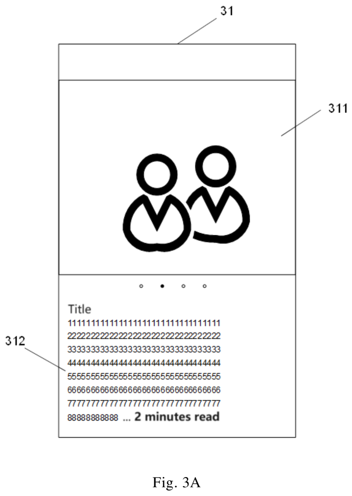

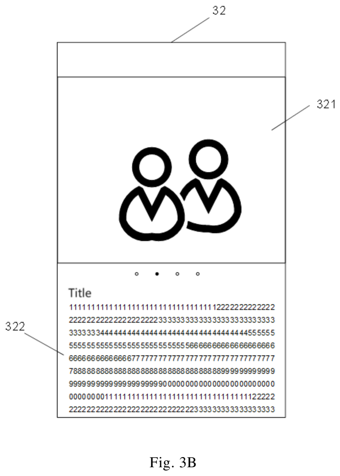

FIGS. 3A and 3B shows schematic diagrams of a page of image-text content and its detail page. In FIG. 3A, a page 31 of image-text content comprises an image container 311 and a text container 312. The image container 311 comprises four images, with the second image currently displayed; the text container 312 comprises a truncated text and a identifier "2 minutes read" of the truncated text. When a user performs a specific operation on the image, a detail page 32 shown in FIG. 3B is displayed. In the detail page 32, the image container 321 comprises 4 images, with the second image currently displayed; and the text container 322 comprises a full text.

The above embodiment implements a scheme for providing a user with image-text content in a feed, wherein the truncated text is displayed in the feed and a detail page containing full text is displayed in response to the user's specified operation. Thus, if the user is interested in the image-text content while browsing the feed, he/she can further explore the complete information of the image-text content through a convenient and easy-to-understand operation, to conveniently and efficiently obtain long text information. Furthermore, in the above embodiment, the type of content in the feed can be expanded with minimal impact on the global architecture of the feed.

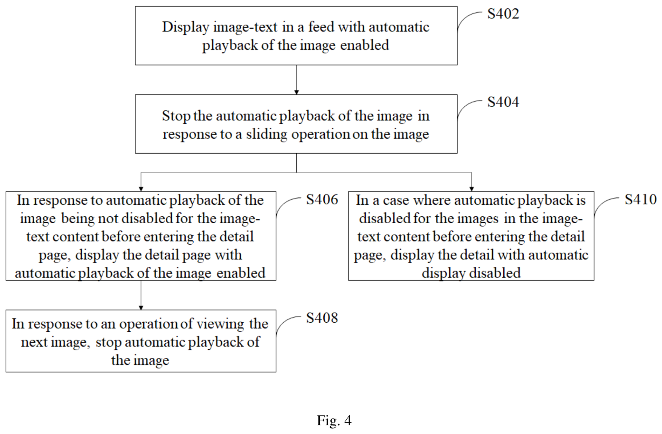

In some embodiments, images of the image-text content can be played automatically one after another, whether on a page with the truncated text of the image-text content or on its detail page. Some image-text content can also have background music. Some embodiments of the present disclosure can control the automatic playback of images based on user operations. An embodiment of an automatic playback control method for images will be described with reference to FIG. 4.

FIG. 4 shows a flowchart of an automatic playback control method according to some embodiments of the present disclosure. As shown in FIG. 4, the automatic playback control method of this embodiment comprises steps S402 to S404.

In step S402, image-text content is displayed in a feed with automatic playback of the image enabled.

In step S404, the automatic playback of the image is stopped in response to a sliding operation on the image.

The images will continue to play back automatically if the user does not perform a sliding operation or other operation to stop the automatic playback of the images.

When the detail page is displayed, whether to continue automatic playback of the image is determined based on a final Autoplay state of the image-text content before entering the detail page, the Autoplay state indicating whether automatic playback of the image is enabled. That is, an automatic playback state of the image in the detail page is same as a last automatic playback state of the image before entering the detail page.

For example, this embodiment may further comprise steps S406 or S408.

In step S406, in response to automatic playback of the image being not disabled for the image-text content before entering the detail page, the detail page is displayed with automatic playback of the image enabled.

In step S408, in response to an operation of viewing the next image, automatic playback of the image is stopped.

Automatic playback continues in a case where the user does not perform an operation to view the next image or another operation for stopping automatic playback.

For example, this embodiment may further comprise step S410.

In step S410, in response to automatic playback being disabled for the images in the image-text content before entering the detail page, the detail page is displayed with automatic display disabled.

When returning to the interface of the feed displaying the image-text content from the detail page, the state of automatic playback is the same as on the detail page.

In some embodiments, the playback of background music continues when automatic image playback is stopped in the detail page of the image-text content. Thus, the playback of music continues regardless of whether automatic image playback is stopped or not.

With the above automatic playback control scheme, it is possible to maintain the consistency of automatic playback between the feed page and the detail page.

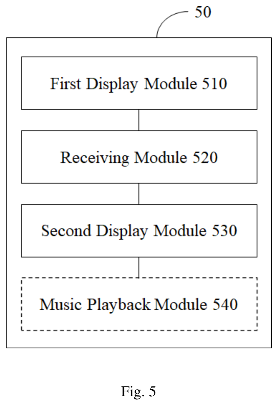

An embodiment of a display apparatus for image-text content of the present disclosure will be described below with reference to FIG. 5.

FIG. 5 shows a schematic structural diagram of a display apparatus for image-text content according to some embodiments of the present disclosure. As shown in FIG. 5, the display apparatus 50 of this embodiment comprises: a first display module 510 configured to display image-text content in a feed, wherein the image-text content comprises an image and a truncated text; a receiving module 520 configured to receive an operation performed by a user on the image of the image-text content; a second display module 530 configured to display a detail page of the image-text content in response to the operation performed by the user on the image of the image-text content being a specified operation, the detail page comprising the image and a full text.

In some embodiments, the specified operation comprises a sliding operation.

In some embodiments, the sliding operation of the specified operation has different sliding information from a sliding operation for switching between different content in the feed, the sliding information comprising at least one of a sliding direction or a sliding distance.

In some embodiments, the image-text content comprises a plurality of images, and the second display module 530 is further configured to display the detail page of the image-text content in response to the sliding operation performed by the user on any one of the plurality of images.

In some embodiments, the image-text content comprises a plurality of images, and the second display module 530 is further configured to display the detail page of the image-text content in response to the sliding operation performed by the user on a last image among the plurality of images, wherein a sliding operation performed by the user on an other image than the last image among the plurality of images is used to switch to a display of an adjacent image of the other image.

In some embodiments, the first display module 510 is further configured to display the image-text content in the feed in response to a return operation performed by the user on the detail page, wherein before the user switches to content other than the image-text content in the feed, the detail page is not displayed in response to another sliding operation performed by the user on the image.

In some embodiments, the specified operation comprises a scaling operation.

In some embodiments, the specified operation comprises a click operation.

In some embodiments, the first display module 510 is further configured to, in response to an automatic playback of the image being enabled in the feed, stop the automatic playback of the image in response to a sliding operation on the image.

In some embodiments, an automatic playback state of the image in the detail page is same as a last automatic playback state of the image before entering the detail page.

In some embodiments, the second display module 530 is further configured to, in response to an automatic playback of the image being enabled in the detail page, stop the automatic playback of the image in response to a sliding operation on the image.

In some embodiments, the image-text content further comprises background music, and the display apparatus 50 further comprises: a music playback module 540 configured to continue playing the background music in response to stopping automatic image playback in the detail page of the image-text content.

In some embodiments, an aspect ratio of the image in the image-text content is less than a first ratio threshold.

In some embodiments, the image container for carrying the images is arranged as a sticky element on an upper side of an interface of the feed.

In some embodiments, the truncated text comprises a text of a target length and an identifier of the truncation text, wherein the identifier represents at least one of a prompt to view details, a length of a text in the full text other than the truncated text, or a reading time of the text in the full text other than the truncated text.

In some embodiments, the target length is determined from an aspect ratio of the image.

In some embodiments, the target length is a first length in response to an aspect ratio of at least one image of the image-text content is greater than a second ratio threshold; and the target length is a second length that is no greater than the first length in response to the aspect ratio of the at least one image of the image-text content is not greater than the second ratio threshold.

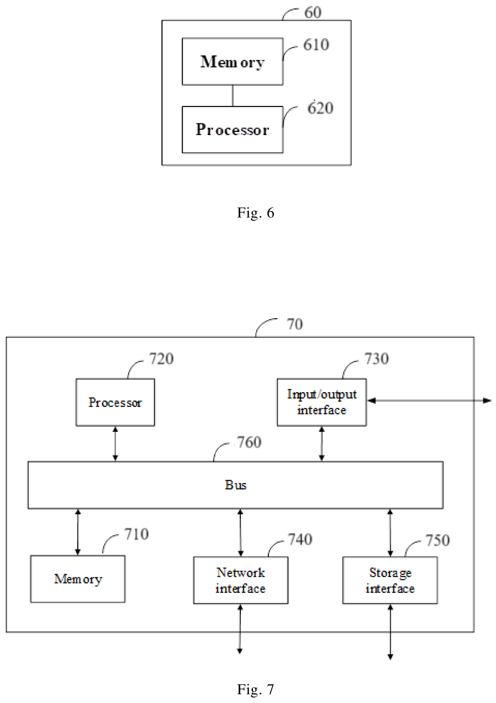

FIG. 6 shows a schematic structural diagram of a display apparatus for image-text content according to other embodiments of the present disclosure. As shown in FIG. 6, a display apparatus 60 for image-text content of this embodiment comprises: a memory 610 and a processor 620 coupled to the memory 610, the processor 620 configured to, based on instructions stored in the memory 610, carry out the display method for image-text content according to any one of the above embodiments.

The memory 610 may comprise, for example, system memory, a fixed non-volatile storage medium, or the like. The system memory stores, for example, an operating system, application programs, a boot loader, and other programs.

FIG. 7 shows a schematic structural diagram of a display apparatus for image-text content according to still other embodiments of the present disclosure. As shown in FIG. 7, a display apparatus 70 for image-text content of this embodiment comprises: a memory 710 and a processor 720, and may further comprise an input-output interface 730, a network interface 740, a storage interface 750, and the like. These interfaces 730, 740, 750, the memory 710 and the processor 720 may be connected through a bus 770, for example. The input-output interface 730 provides a connection interface for input-output devices such as a display, a mouse, a keyboard, and a touch screen. The network interface 740 provides a connection interface for various networked devices. The storage interface 750 provides a connection interface for external storage devices such as an SD card and a USB flash disk.

An embodiment of the present disclosure further provides a computer-readable storage medium on which a computer program is stored, characterized in that the program when executed by a processor implements any one of the above display methods for image-text content.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this disclosure, and is not limitation to this disclosure. Within spirit and principles of this disclosure, any modification, replacement, improvement and etc. shall be contained in the protection scope of this disclosure.

## Claims

1. A display method for image-text content, comprising:
displaying image-text content in a feed, wherein the image-text content comprises an image and a truncated text;
receiving an operation performed by a user on the image of the image-text content; and
displaying a detail page of the image-text content in response to the operation performed by the user on the image of the image-text content being a specified operation, the detail page comprising the image and a full text.

2. The display method according to claim 1, wherein the specified operation comprises a sliding operation.

3. The display method according to claim 2, wherein the sliding operation of the specified operation has different sliding information from a sliding operation for switching between different content in the feed, the sliding information comprising at least one of a sliding direction or a sliding distance.

4. The display method according to claim 2 or 3, wherein the image-text content comprises a plurality of images, and the displaying the detail page of the image-text content in response to the operation performed by the user on the image of the image-text content being the specified operation comprises:
displaying the detail page of the image-text content in response to the sliding operation performed by the user on any one of the plurality of images.

5. The display method according to any of claims 2 to 4, wherein the image-text content comprises a plurality of images, and the displaying the detail page of the image-text content in response to the operation performed by the user on the image of the image-text content being the specified operation comprises:
displaying the detail page of the image-text content in response to the sliding operation performed by the user on a last image among the plurality of images, wherein a sliding operation performed by the user on an other image than the last image among the plurality of images is used to switch to a display of an adjacent image of the other image.

6. The display method according to any one of claims 2 to 5, further comprising:
displaying the image-text content in the feed in response to a return operation performed by the user on the detail page; and
before the user switches to content other than the image-text content in the feed, not displaying the detail page in response to another sliding operation performed by the user on the image.

7. The display method according to any of claims 1 to 6, wherein the specified operation comprises a scaling operation.

8. The display method according to any of claims 1 to 7, wherein the specified operation comprises a click operation.

9. The display method according to any of claims 1 to 8, wherein the displaying the image-text content in the feed comprises:
in response to an automatic playback of the image being enabled in the feed, stopping the automatic playback of the image in response to a sliding operation on the image.

10. The display method according to any of claims 1 to 9, wherein an automatic playback state of the image in the detail page is same as a last automatic playback state of the image before entering the detail page.

11. The display method according to claim 10, wherein the displaying the detail page of the image-text content comprises:
in response to an automatic playback of the image being enabled in the detail page, stopping the automatic playback of the image in response to a sliding operation on the image.

12. The display method according to claim 11, wherein the image-text content further comprises background music, and the display method further comprises:
continuing playing the background music in response to stopping automatic image playback in the detail page of the image-text content.

13. The display method according to any of claims 1 to 12, wherein an aspect ratio of the image in the image-text content is less than a first ratio threshold.

14. The display method according to claim 13, wherein an image in the image-text content having an aspect ratio greater than the first ratio threshold is cropped based on the first ratio threshold and then displayed.

15. The display method according to claim 13, wherein an image container used to carry the image has an aspect ratio equal to the first ratio threshold, and the image in the image container is displayed after adaptive scaling.

16. The display method according to any one of claims 1 to 15, wherein the image container for carrying the images is arranged as a sticky element on an upper side of an interface of the feed.

17. The display method according to any of claims 1 to 16, wherein the truncated text comprises a text of a target length and an identifier of the truncation text, wherein the identifier represents at least one of a prompt to view details, a length of a text in the full text other than the truncated text, or a reading time of the text in the full text other than the truncated text.

18. The display method according to claim 17, wherein the target length is determined from an aspect ratio of the image.

19. The display method according to claim 18, wherein:
the target length is a first length in response to an aspect ratio of at least one image of the image-text content is greater than a second ratio threshold; and
the target length is a second length that is no greater than the first length in response to the aspect ratio of the at least one image of the image-text content is not greater than the second ratio threshold.

20. A display apparatus for image-text content, comprising:
a memory; and
a processor coupled to the memory, the processor configured to, based on instructions stored in the memory, carry out the display method for image-text content according to any one of claims 1 to 19.

21. A computer-readable storage medium stored thereon a computer program that, when executed by a processor, implements the display method for image-text content according to any one of claims 1 to 19.

22. A computer program product that when running on a computer causes the computer to implement the display method for image-text content according to any one of claims 1 to 19.

23. A computer program, comprising:
instructions that, when executed by a processor, cause the processor to perform the display method for image-text content according to any one of claims 1 to 19.
